# EUROPEAN PATENT SPECIFICATION

(11) **EP 3 158 898 B1**
(45) Date of publication and mention of the grant of the patent: **06.06.2018**
(21) Application number: 16195296.5
(22) Date of filing: 24.10.2016
(51) Int. Cl.: A47J 27/10

(54) **APPARATUS AND METHOD TO REGULATE AND CONTROL THE COOKING OF VACUUM-SEALED FOODS**
VORRICHTUNG UND VERFAHREN ZUM REGELN UND STEUERN DES KOCHENS VON VAKUUMVERSIEGELTEN LEBENSMITTELN
APPAREIL ET PROCÉDÉ DE RÉGULATION ET DE COMMANDE DE CUISSON D'ALIMENTS SOUS VIDE

(30) Priority: 23.10.2015 IT UB20155103
(43) Date of publication of application: 26.04.2017
(73) Proprietor: Besser Vacuum S.r.l., 33030 Dignano (UD) (IT)
(72) Inventor: Cancellier, Francesca, 30016 Jesolo (VE) (IT)
(74) Representative: Petraz, Gilberto Luigi

(56) References cited:
- WO-A1-2012/006674
- WO-A1-2014/019018
- GB-A- 2 525 011
- US-A1- 2014 260 998
- US-A1- 2015 118 362
- US-A1- 2015 289 544

## Description

### FIELD OF THE INVENTION

The present invention concerns an apparatus and a method to regulate and control the cooking of vacuum-sealed foods.

In particular, the present invention concerns an apparatus to regulate and control the cooking of vacuum-sealed foods in which it is possible to regulate and control remotely the cooking parameters of the food to be cooked, which is positioned inside a heat-circulator group, and a consequent method to regulate and control the cooking of vacuum-sealed foods.

### BACKGROUND OF THE INVENTION

It is known that there are apparatuses for cooking vacuum-sealed foods, generally called heat-circulators, into which the food to be cooked is introduced, inserted in suitable vacuum-sealed bags.

Examples of such apparatuses for vacuum-sealed cooking, used for cooking *sous vide*, are described in documents GB-A-2.525.011, US-A-2014/0260998, WO-A-2014/019018 and US-A-2015/0289544. Another example of a cooking apparatus is described in WO-A-2012/006674.

Heat-circulators are devices that can be associated with a receptacle or container in which a certain quantity of water is contained, and provided with at least an electric resistance to heat the water. The bag with the vacuum-sealed foods is at least partly immersed into the water contained in the receptacle. A device to re-circulate the water is positioned in the receptacle, so as to make the temperature homogeneous throughout the volume of water. The electric resistance is commanded by a manual system housed on board the heat-circulator, so as to set the temperatures of the desired cooking cycle. The cooking cycle of a vacuum-sealed foods using a heat-circulator is generally very slow and is carried out at low temperatures. The cooking cycle can take several hours, even up to 48 hours, and the cooking temperature of the vacuum-sealed foods is relatively low, for example about 60-70°C.

Given the long cooking times, controlling the cooking cycle in known heat-circulators can be very problematic, since the constant presence of the operator or user is required.

Furthermore, again because of the long cooking times, it is often chosen to start and/or carry out at least part of the cooking cycle during the night hours.

In substance therefore, it is practically impossible to control the various cooking steps constantly, either because it is extremely unlikely that an operator or user will follow the whole cooking cycle constantly, or because, during the night, the heat-circulator unit continues functioning undisturbed and without any control.

If problems or functioning anomalies of the heat-circulator unit occur, it is therefore very likely that there will be no immediate intervention by an operator or user, and unfortunately this can also entail the loss of the food to be cooked.

Such problems or functioning anomalies are rather common and frequent and can be, for example, a temporary interruption of the electric power to the heat-circulator unit, phenomena of sudden evaporation inside the receptacle, breakages or malfunctions of the components of the heat-circulator and other.

One purpose of the invention is therefore to obtain an apparatus to regulate and control the cooking of vacuum-sealed foods that is simple to use, immediate and that can be driven, regulated and controlled interactively and remotely, so that the user is constantly informed of what is happening in the cooking process and can intervene at any moment to carry out operations to regulate the cooking of the vacuum-sealed foods, or operations intended to safeguard the integrity of the food in the event of problems and/or interruptions in the functioning of the heat-circulator unit.

Another purpose of the invention is to obtain an apparatus to regulate and control the cooking of vacuum-sealed foods on which it is possible to make a complete functional diagnosis, both automatically and programmably, so as to estimate the occurrence of any technical problem and act preventively.

Another purpose of the invention is to obtain an apparatus to regulate and control the cooking of vacuum-sealed foods by means of which it is possible to make the energy consumption required for cooking the vacuum-sealed foods more efficient and rational, for example by choosing periods of time that are more favorable for the consumption of electric energy and/or regulating remotely the cooking temperature and parameters.

Another purpose of the invention is to perfect a method to regulate and control the cooking of vacuum-sealed foods that is simple, immediate, interactive and can be performed remotely.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, an apparatus to regulate and control the cooking of vacuum-sealed foods is provided with at least a heat-circulator unit associable with any receptacle whatsoever for containing cooking liquid in which at least a vacuum-sealed container containing the food to be cooked is at least partly immersed, and one or more heating elements to heat the cooking liquid.

According to one aspect of the invention, the apparatus comprises a first fixed command and control unit associated with the heat-circulator unit and provided with at least a first remote data communication module and a second mobile command and control unit, portable and in the possession of a user and provided with at least a second remote data communication module; the first and second remote data communication modules are configured to allow the remote and two-directional communication between the first fixed command and control unit and the second mobile command and control unit; the first fixed command and control unit is provided with an integrated diagnostic system configured to receive from the heat-circulator unit data relating to the cooking parameters of the food and the functioning parameters of the heat-circulator unit and to transmit them to the second mobile command and control unit in the possession of the user.

In accordance with another aspect of the present invention the apparatus comprises at least a container made of flexible material and configured to contain the food in a vacuum-sealed condition.

In accordance with another solution, the apparatus comprises a first sensor configured to detect the internal temperature of the food and to transmit temperature data to the second mobile command and control unit, and the first sensor comprises a probe in the shape of a pin which can be inserted through the container and into the food to detect the internal temperature.

The presence of a probe that can be positioned in the heart of the food to be cooked is particularly advantageous for the user since he/she can know directly the actual cooking condition of the food: in the state of the art, this condition is determined empirically according to predetermined cooking times based on previous experience.

Advantageously, the two-directional communication between the first fixed command and control unit associated with the heat-circulator unit and the second mobile command and control unit located remote and available to the user, allows the user to constantly verify the data of the cooking process. The apparatus also allows to transform the long and delicate vacuum-sealed cooking process of any food whatsoever into an activity that is regulated, controlled and flexible, with broad functionality and applications, also with practical confirmation with regard to the quality of the foods produced. Furthermore, precisely because of its functionality and the possibility of controlling and regulating it remotely, the present apparatus can be used either by an expert operator, for example a chef, or by an amateur and/or domestic user.

In substance, the present apparatus to regulate and control the cooking of vacuum-sealed foods therefore allows to control and regulate the process of cooking food in real time, and allows a perfect repeatability of every type of cooking even if characterized by different production cycles and also in different and distant places; it also allows to modulate the cooking parameters in order to enhance, in every context, the particular properties of the food cooked, whether it is meat, fish, vegetables or other.

According to another aspect of the invention, the integrated diagnostic system is connected to a plurality of sensors to detect the cooking parameters of the food provided in the heat-circulator unit, and in particular to the first temperature sensor located inside the food to be cooked and able to communicate with the mobile command and control unit in the possession of the user.

Preferably, the remote data communication modules are Wi-Fi modules and the first and second fixed and mobile command and control units are configured to communicate with an Internet connection device.

The first and/or second fixed and mobile command and control units can communicate with a remote data storage, processing and exchange service.

The invention also concerns a method to regulate and control the cooking of vacuum-sealed foods, which comprises inserting food to be cooked into a container made of flexible material, generating a vacuum condition in the container to take the food into a vacuum-sealed condition, closing the container, setting parameters relating to a determinate cooking process in a heat-circulator unit; detecting, during the cooking process, data relating to the cooking parameters by a first fixed command and control unit; transmitting the data to a second mobile command and control unit, located remote and in the possession of the user; the verification by the user, by means of the second mobile command and control unit, of the data sent by the first fixed command and control unit and relating to the cooking parameters.

According to one aspect of the method, the insertion is provided, through the container and into the food, of a pin-shaped probe and of a first sensor, and the transmission of internal temperature data of the food detected by the probe to the second mobile command and control unit.

### BRIEF DESCRIPTION OF THE DRAWINGS

These and other characteristics of the present invention will become apparent from the following description of some embodiments, given as a non-restrictive example with reference to the attached drawings wherein:

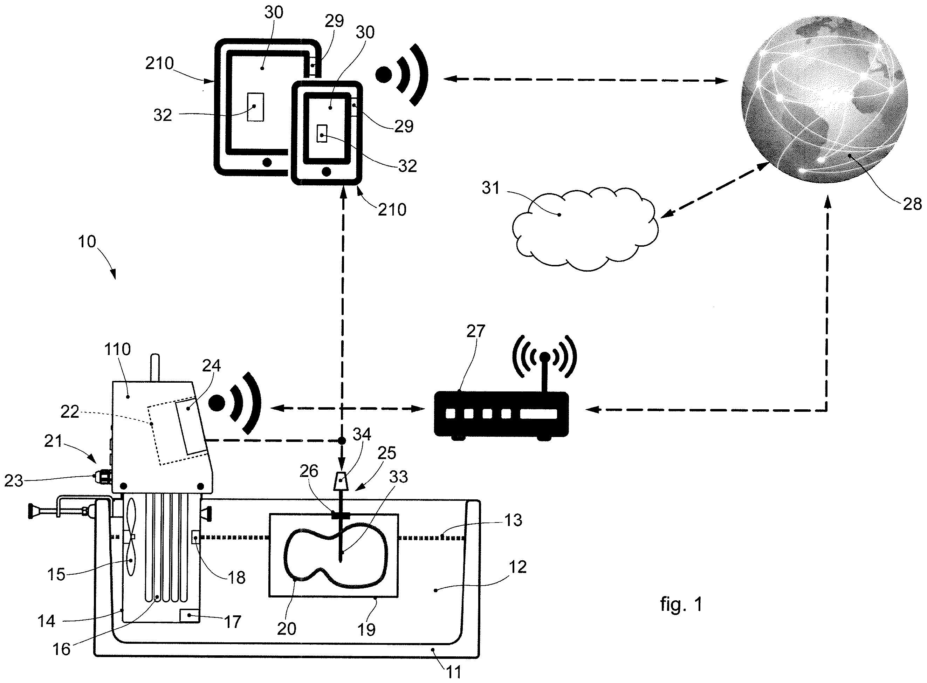

- fig. 1 is a diagram showing the present apparatus to regulate and control the cooking of vacuum-sealed foods.

### DETAILED DESCRIPTION OF SOME EMBODIMENTS

With reference to fig. 1, an apparatus 10 to regulate and control the cooking of vacuum-sealed foods according to the invention comprises a heat-circulator unit 21 associable with any receptacle 11 containing a certain quantity of cooking liquid 12, for example water. The level of liquid 12 is symbolized by the dotted line 13. Inside the receptacle 11 a support structure 14 is housed, in which a device 15 to recirculate the liquid 12, one or more heating elements 16 to heat the liquid 12, for example electric resistances or elements of a heat exchanger, and a sensor 17 to detect the temperature of the liquid 12 are schematically shown. The recirculation device 15 can be a rotor or a fan, for example, or a recirculation pump.

Inside the receptacle 11 a sensor 18 is positioned, for example a floating sensor, to detect the level of the liquid 12.

The receptacle 11 provides an upper aperture and a container 19 is introduced inside, made of flexible material and configured to contain the food 20 in a vacuum-sealed condition.

The container, hereafter referred to as vacuum-sealed container 19, for example a vacuum-sealed bag, contains during use the food 20 in a vacuum-sealed condition at least during the entire cooking cycle by means of the heat-circulator unit 21. The vacuum-sealed container 19 is at least partly immersed in the cooking liquid 12 contained in the receptacle 11.

Above the structure 14 and outside the receptacle 11 a fixed command and control unit 110 is positioned, associated with the heat-circulator unit 21 and able to control and regulate the cooking parameters of the heat-circulator unit 21.

The heat-circulator unit 21 has externally a connector 23 to connect it to a normal electricity supply network, and the fixed command and control unit 110 internally comprises an electronic board 22 provided with a two-directional communication module 24 of remote data, for example a Wi-Fi communication module.

All the sensors described heretofore are also connected to the electronic board 22, by means of an integrated diagnostic system with which the board is provided, that is, the sensor 17 to detect the temperature of the liquid 12 and the sensor 18 to detect the level of the liquid 12.

The apparatus also comprises a first sensor 25 configured to detect the internal temperature of the food 20 and to transmit the temperature data detected to the second mobile command and control unit 210.

The first sensor 25 comprises a probe 33 in the shape of a pin that can be inserted through the container 19 and into the food 20 to detect the internal temperature of the latter.

According to the invention, the probe 33 has an elongated development, with a rigid structure, and is provided with a pointed end to pierce and pass through the vacuum-sealed container 19 and the food contained therein.

A first sensor 25 to detect the temperature of the food 20 to be prepared is also connected to the electronic board 22 and the integrated diagnostic system.

According to a possible solution, the pin-shaped probe 33 is inserted inside the food 20 through an adhesive strip 26, for example neoprene, that is, by piercing it, which allows to maintain the vacuum conditions inside the vacuum-sealed container 19, which is passed through by the probe.

The fixed command and control unit 110 of the heat-circulator unit 21 also comprises a data display and a keyboard for setting and regulating the cooking parameters.

If the data communication module 24 is a Wi-Fi module, the fixed command and control unit 110 of the heat-circulator unit 21 will communicate in two-directional mode with a connection device 27, for example a modem router, which will allow the fixed command and control unit 110 to access the Internet 28.

The apparatus 10 to regulate and control the cooking of vacuum-sealed foods also comprises a mobile command and control unit 210, positioned remote with respect to the first fixed command and control unit 110 and in the possession of the user.

The mobile command and control unit 210 is portable by the user.

The mobile command and control unit 210 is provided with a data communication module 29, for example a Wi-Fi module, by means of which it can exchange data in two-directional mode with the fixed command and control unit 110, provided on board the heat-circulator unit 21.

If the communication module 29 is a Wi-Fi module, the second command and control unit 210 can also be associated with the connection device 27 and therefore communicate in two-directional mode with the Internet 28 and with the first fixed command and control unit 110.

The second mobile command and control unit 210 is provided with a corresponding display 30 to display and input data, for example a touch screen display. The second mobile command and control unit 210 can be a tablet for example, or a smartphone, a portable computer or suchlike, equipped with the remote data communication module 29.

On the display 30 of the mobile command and control unit at least one icon 32 is provided, for the user to start an app that allows communication and data exchange with the first fixed command and control unit 110 and which allows to regulate the cooking parameters.

The remote communication system between the fixed command and control unit 110 and the mobile command and control unit 210 can also be a Bluetooth system.

The first fixed and second mobile command and control unit 110 and 210 can also be connected, through the Internet 28, to a data storage, processing and exchange service 31, for example a so-called automated "Cloud" service, which is therefore able to receive data and information on the functioning condition of the apparatus 10 and all the parameters detected during the cooking of the food 20.

Other apparatuses to control and regulate cooking can also be connected to the data storage, processing and exchange service 31, by means of the corresponding mobile command and control units 210, so that there can also be an exchange of data and information between different users of the regulation and control apparatuses 10.

By means of the fixed command and control unit 110 associated with the heat-circulator unit 21 and the mobile command and control unit 210 in the possession of the user, it is possible to manage all the cooking parameters of the food 20 remotely, for example it is possible to verify the level of the liquid 12, by communicating the datum of the water level from the sensor 18 to the fixed command and control unit 110 and hence to communicate said level of liquid 12 from said fixed command and control unit 110 to the mobile command and control unit 210, by means of the corresponding remote communication modules 24 and 29.

Other important parameters that can be verified and exchanged remotely between the two units 110 and 210 are for example the temperature of the liquid 12, detected by the sensor 17, and the internal temperature of the food 20 to be cooked, detected by the first sensor 25.

According to possible embodiments, the first sensor 25 is provided with a wireless communication element 34, configured to transmit the temperature data detected in wireless mode to the second mobile command and control unit 210. This solution makes the first sensor 25 extremely easy to handle for the user, for example avoiding physical connections between the first sensor 25 and the first fixed command and control unit 110.

According to a possible embodiment, the wireless communication element 34 is configured to transmit, in wireless mode, the temperature data detected to the first module 24 of the first fixed command and control unit 110. In its turn, the first module 24 is configured to transmit the temperature data detected to the second mobile command and control unit 210.

All the data detected by the sensors 17, 18 and 25, communicated by the fixed command and control unit 110 to the mobile command and control unit 210, thanks to the integrated diagnostic system, allow to manage and control the cooking in real time: for example, the user can know at any moment the data detected by the sensors 17, 18 and 25, and displayed on the display. The user can also memorize the data at any moment of the cooking process.

If there is an undesired event, happening during the cooking process, such as a breakdown in the heat-circulator unit 21, a temporary electric power failure or other anomaly detected by the sensors 17, 18 or 25, it is provided that the diagnostic system integrated in the electronic board 22 intervenes and communicates the unwanted event to the fixed command and control unit 110. The fixed command and control unit 110 communicates the unwanted event to the mobile command and control unit 210 and the latter signals the unwanted event visually and/or acoustically to the user.

The warning to the user is very advantageous, because it allows the user to intervene immediately on the cooking process. The intervention, where possible, can be carried out directly by the mobile command and control unit 210, or directly on the heat-circulator unit 21.

Supposing for example that the temperature value of the cooking liquid 12 detected by the sensor 17 is no longer the correct one set initially for cooking: in this case the user is informed visually on the display 30 and possibly also by an acoustic signal that the value has changed. At this point, the user, remotely and using the mobile command and control unit 210, can correct the current temperature value of the water, commanding the fixed command and control unit 110 to act on the heating elements 16 of the liquid 12.

On the contrary, for example, if the level of liquid 12 has gone down due to an unwanted evaporation, and the original and correct level of the water has to be restored, it is possible to send from the mobile command and control unit 210 a command signal to the recirculation device 15. If the recirculation device 15 is a pump connected to an external water source, the recirculation device 15 can take a certain quantity of water from outside the heat-circulator unit 21 and introduce it into the receptacle 11, so as to restore the original level of water.

In the same way, the temperature and intensity of heating of the heating elements 16, and also the cooking time of the food 20, can be regulated remotely using the mobile command and control unit 210, according to the data detected and transmitted by the sensor 25 that detects the temperature of the food 20 to be cooked.

The interventions of the integrated diagnostic system of the fixed command and control unit 110 can also be programmed or planned to be carried out at predetermined intervals of time, and will be controlled and managed directly by the mobile command and control unit 210.

It is obvious that the present apparatus to regulate and control the cooking of vacuum-sealed foods can be used simply, effectively and immediately, both by an expert user, for example a chef, and also by a less expert user.

The regulated and controlled cooking of vacuum-sealed foods by the present apparatus therefore determines a simplification of the cooking process in every environment, both professional and domestic, and allows to obtain considerable savings in time, electric energy used and also of the food itself, since, as we said at the beginning, in known heat-circulator units any anomalies or unwanted events during the cooking process can lead to the food to be cooked being wasted.

Both the fixed and also the mobile command and control units 110 and 210 can be equipped with data memorization supports, relating for example to parameters of the cooking process detected by the sensors 17, 18 and 25, to the cooking times and to the possible data storage, processing and exchange service 31 located remote and accessible through the Internet 28.

On the displays of the mobile and/or fixed command and control units 110 and 210 graphs can also be displayed, showing the trend of the cooking process, for example time/temperature graphs referring to the various steps and the various sensors 17, 18 and 25 of the heat-circulator unit 21.

The efficiency of the cooking process can also be considerably increased by consulting data and times relating to previous cooking processes, memorized on the memorization supports, provided on at least one of either the fixed and/or mobile command and control units 110 and 210 and/or in said service 31.

Another important advantage of the present apparatus to regulate and control the cooking of vacuum-sealed foods is that, thanks to the previous memorization of a determinate cooking process, it is possible to replicate a determinate cooking process perfectly, even if it is a complex process characterized by one or more cooking cycles and even if performed in different countries or places. In substance the user can upload onto the mobile command and control unit 210 a determinate cooking process and communicate it directly to the heat-circulator unit 21, through the fixed command and control unit 110. The cooking process uploaded can be taken directly from the memory support of the mobile command and control unit 210 or from the data storage, processing and exchange service 31. Clearly, various recipes and cooking modes can also be downloaded by the user from the service 31.

By memorizing and studying the data relating to previous cooking processes, it is also possible to obtain predictions of what can happen in a determinate cooking process and to program an intervention in advance, for example to foresee that in the receptacle 11 containing the water, in a determinate cooking process, after a certain time the level of water will get lower, based precisely on the data deriving from previous and similar cooking processes. In this case, for example, it is possible to automatically provide the intervention of the recirculation device 15 as soon as the water level in the receptacle 11 goes down, if, as we said above, the recirculation device 15 is a recirculation pump.

As mentioned above, the mobile command and control unit 210 can be a normal smartphone, a tablet, a portable computer or suchlike. It will be possible to install in the smartphone or tablet an app that suitably manages communication with the fixed command and control unit 110. The app will be started for example using the icon 32 present on the display of the smartphone or tablet.

It is clear that modifications and/or additions of parts may be made to the apparatus and method to regulate and control the cooking of vacuum-sealed foods as described heretofore, without departing from the field and scope of the present invention.

It is also clear that, although the present invention has been described with reference to some specific examples, a person of skill in the art shall certainly be able to achieve many other equivalent forms of apparatus and method to regulate and control the cooking of vacuum-sealed foods, having the characteristics as set forth in the claims and hence all coming within the field of protection defined thereby.

## Claims

1. Apparatus (10) to regulate and control the cooking of vacuum-sealed foods, provided with at least a heat-circulator unit (21) associable with a receptacle (11) for containing cooking liquid (12) in which at least a vacuum-sealed container (19) containing the food (20) to be cooked is at least partly immersed, and one or more heating elements (16) to heat the cooking liquid (12), said apparatus comprising a first fixed command and control unit (110) associated with said heat-circulator unit (21) and provided with at least a first remote data communication module (24) and a second mobile command and control unit (210), portable and in the possession of a user and provided with at least a second remote data communication module (29), said first and second remote data communication modules (24, 29) being configured to allow the remote and two-directional communication between said first fixed command and control unit (110) and said second mobile command and control unit (210), said first fixed command and control unit (110) being provided with an integrated diagnostic system configured to receive at least from said heat-circulator unit (21) data relating to the cooking parameters of the food (20) and the functioning parameters of the heat-circulator unit (21), and to transmit them to said second mobile command and control unit (210) in the possession of the user, and wherein said apparatus comprises at least a container (19) made of flexible material and configured to contain said food (20) in a vacuum-sealed condition, **characterized in that** it comprises a first sensor (25) configured to detect the internal temperature of said food (20) and to transmit temperature data to said second mobile command and control unit (210), **and in that** said first sensor (25) comprises a probe (33) in the shape of a pin which can be inserted through said container (19) and into said food (20) to detect said inside temperature, said probe (33) having an elongated development, with a rigid structure, and is provided with a pointed end to pierce and pass through the vacuum-sealed container (19) and the food (20) contained therein.

2. Apparatus as in claim 1, **characterized in that** said first sensor (25) is provided with a wireless communication element (34) configured to transmit the temperature data detected in wireless mode to said second mobile command and control unit (210).

3. Apparatus as in claim 2, **characterized in that** said wireless communication element (34) is configured to transmit, in wireless mode, the temperature data detected to said first module (24) of said first fixed command and control unit (110), **and in that** said first module (24) is configured to transmit said temperature data detected to said second mobile command and control unit (210).

4. Apparatus as in any claim hereinbefore, **characterized in that** an adhesive strip (26) is associated with said container (19), through which said probe (33) is inserted, and is configured to maintain the vacuum conditions inside said container (19).

5. Apparatus as in any claim hereinbefore, **characterized in that** said heat-circulator unit (21) comprises at least a device (15) to recirculate the cooking liquid (12) associated with said integrated diagnostic system and able to be commanded remotely by means of said second mobile command and control unit (210).

6. Apparatus as in any claim hereinbefore, **characterized in that** said heat-circulator unit (21) comprises a sensor (17) to detect the temperature of the cooking liquid (12) and a sensor (18) to detect the level of the cooking liquid (12), said sensors being associated with said integrated diagnostic system and able to communicate remotely with said second mobile command and control unit (210).

7. Apparatus as in any claim hereinbefore, **characterized in that** said remote data communication modules (24, 29) are Wi-Fi modules and said first and second fixed and mobile command and control units (110, 210) are configured to communicate with a device (27) to connect to the Internet (28).

8. Apparatus as in any claim hereinbefore, **characterized in that** said first and/or second fixed and mobile command and control units (110, 210) communicate with a remote data storage, processing and exchange service (31).

9. Apparatus as in any claim hereinbefore, **characterized in that** at least said second mobile command and control unit (210) comprises visual and/or acoustic means to signal a possible anomalous datum relating to one or more cooking parameters detected and transmitted by said first fixed command and control unit (110).

10. Apparatus as in any claim hereinbefore, **characterized in that** said second mobile command and control unit (210) comprises at least a display (30) to display and insert data configured to display the data transmitted by said first fixed command and control unit (110) and possibly to transmit to said first fixed command and control unit (110) variations on the cooking parameters of the food (20).

11. Method to regulate and control the cooking of vacuum-sealed foods, comprising: inserting food (20) to be cooked into a container (19) made of flexible material, generating a vacuum condition in said container (19) to take said food (20) into a vacuum-sealed condition, closing said container (19), setting parameters relating to a determinate cooking process in a heat-circulator unit (21); detecting, during the cooking process, data relating to said cooking parameters by a first fixed command and control unit (110); transmitting said data to a second mobile command and control unit (210), located remote and in the possession of the user; the verification by the user, by means of said second mobile command and control unit (210), of the data sent by said first fixed command and control unit (110) and relating to said cooking parameters, **characterized in that** the insertion is provided, through said container (19) and into said food (20), of a pin-shaped probe (33) and of a first sensor (25), and the transmission of internal temperature data of said food (20) detected by said probe (33) to said second mobile command and control unit (210), said probe (33) having an elongated development, with a rigid structure, and is provided with a pointed end to pierce and pass through the vacuum-sealed container (19) and the food (20) contained therein.

12. Method as in claim 11, **characterized in that** it comprises a subsequent step of varying the cooking parameters by the user through said mobile command and control unit (210), if the data transmitted by said first fixed command and control unit (110) detect unwanted events and/or anomalies in the cooking process.

13. Method as in claim 11 or 12, **characterized in that** it comprises a data storage and processing step, by means of which it is possible to construct a historical archive of the cooking processes and cycles.

14. Method as in any claim from 11 to 13, **characterized in that** it comprises steps of diagnosing the functioning of the heat-circulator unit (21) and hence of the cooking process, said steps being carried out during the cooking process and programmed and managed by the second mobile command and control unit (210) located remote with respect to said heat-circulator unit (21).

## Patentansprüche

1. Vorrichtung (10) zum Regeln und Steuern des Garens vakuumverpackter Nahrungsmittel, die mit wenigstens einer Wärmeumwälzeinheit (21) versehen ist, die mit einem Behälter (11) zum Aufnehmen von Kochflüssigkeit (12) verbindbar ist, in welcher wenigstens ein vakuumversiegelter Behälter (19), der das zu garende Nahrungsmittel (20) enthält, zumindest teilweise eingetaucht ist, und/oder mit mehreren Heizelementen (16) zum Erwärmen der Kochflüssigkeit (12), wobei die Vorrichtung eine erste feststehende Befehls- und Steuereinheit (110) aufweist, die der Wärmeumwälzeinheit (21) zugeordnet ist und die mit mindestens einem ersten Ferndatenkommunikationsmodul (24) und einer zweiten mobilen Befehls- und Steuereinheit (210) ausgestattet ist, die tragbar und im Besitz eines Benutzers sind und die mit mindestens einem zweiten Ferndatenkommunikationsmodul (29) ausgestattet ist, wobei das erste und das zweite Ferndatenkommunikationsmodul (24, 29) dazu ausgelegt sind, die bidirektionale Fernkommunikation zwischen der ersten festen Befehls- und Steuereinheit (110) und der zweiten mobilen Befehls- und Steuereinheit (210) zu ermöglichen, wobei die erste feste Befehls- und Steuereinheit (110) mit einem integrierten Diagnosesystem ausgestattet ist, das so konfiguriert ist, dass es zumindest von der Wärmeumwälzeinheit (21) Daten betreffend Garparameter des Nahrungsmittels (20) und Funktionsparameter der Wärmeumwälzeinheit (21) empfängt und diese an die zweite mobile Befehls- und Steuereinheit (210) im Besitz des Benutzers überträgt, und wobei die Vorrichtung mindestens einen Behälter (19) aus flexiblem Material aufweist, der dazu ausgelegt ist, das Lebensmittel (20) in einem vakuumdichten Zustand zu halten,
**dadurch gekennzeichnet, dass** es einen ersten Sensor (25) umfasst, der dazu ausgelegt ist, die Innentemperatur des Lebensmittels (20) zu erfassen und Temperaturdaten an die zweite mobile Befehls- und Steuereinheit (210) zu übertragen, **und**
**dadurch, dass** der erste Sensor (25) eine Sonde (33) in der Form eines Stiftes aufweist, der durch den Behälter (19) eingeführt werden kann und in das Lebensmittel (20) eindringen kann, wobei die Sonde (33) einen länglichen Aufbau mit einer starren Struktur aufweist und mit einem spitzen Ende versehen ist, um den vakuumdichten Behälter (19) und das darin enthaltene Nahrungsmittel (20) zu durchstechen und hindurchgeführt zu werden.

2. Vorrichtung nach Anspruch 1,
**dadurch gekennzeichnet, dass** der erste Sensor (25) mit einem drahtlosen Kommunikationselement (34) versehen ist, das dazu ausgelegt ist, die im drahtlosen Modus erfassten Temperaturdaten an die zweite mobile Befehls- und Steuereinheit (210) zu übermitteln.

3. Vorrichtung nach Anspruch 2,
**dadurch gekennzeichnet, dass** das drahtlose Kommunikationselement (34) dazu ausgelegt ist, die erfassten Temperaturdaten im drahtlosen Modus an das erste Modul (24) der ersten festen Befehls- und Steuereinheit (110) zu übertragen **und dass** das erste Modul (24) dazu ausgelegt ist, die erfassten Temperaturdaten an die zweite mobile Befehls- und Steuereinheit (210) zu übertragen.

4. Vorrichtung nach einem der vorstehenden Ansprüche,
**dadurch gekennzeichnet, dass** dem Behälter (19) ein Klebestreifen (26) zugeordnet ist, durch den die Sonde (33) eingeführt wird und der dazu ausgelegt ist, die Vakuumbedingungen innerhalb des Behälters (19) aufrecht zu erhalten.

5. Vorrichtung nach einem der vorstehenden Ansprüche,
**dadurch gekennzeichnet, dass** die Wärmeumwälzeinheit (21) mindestens eine Vorrichtung (15) zum Rezirkulieren der Kochflüssigkeit (12) umfasst, die dem integrierten Diagnosesystem zugeordnet ist und mit Hilfe der zweiten mobilen Befehls- und Steuereinheit (210) ferngesteuert werden kann.

6. Vorrichtung nach einem der vorstehenden Ansprüche,
**dadurch gekennzeichnet, dass** die Wärmeumwälzeinheit (21) einen Sensor (17) zum Erfassen der Temperatur der Kochflüssigkeit (12) und einen Sensor (18) zum Erfassen des Füllstandes der Kochflüssigkeit (12) umfasst, wobei die Sensoren dem integrierten Diagnosesystem und zugeordnet sind und mit der zweiten mobilen Befehls- und Steuereinheit (210) über Distanz kommunizieren können.

7. Vorrichtung nach einem der vorstehenden Ansprüche,
**dadurch gekennzeichnet, dass** die Datenfernkommunikationsmodule (24, 29) Wi-Fi-Module sind und die erste und zweite feste und mobile Befehls- und Steuereinheit (110, 210) dazu ausgelegt sind, mit einem Gerät (27) zur Herstellung einer Verbindung mit dem Internet (28) zu kommunizieren.

8. Vorrichtung nach einem der vorstehenden Ansprüche,
**dadurch gekennzeichnet, dass** die erste und/oder die zweite feste und mobile Befehls- und Steuereinheit (110, 210) mit einem entfernten Datenspeicher-, Verarbeitungs- und Austauschdienst (31) kommunizieren.

9. Vorrichtung nach einem der vorhergehenden Ansprüche,
**dadurch gekennzeichnet, dass** wenigstens die zweite mobile Befehls- und Steuereinheit (210) visuelle und / oder akustische Mittel zum Signalisieren eines möglichen anomalen Datenwerts in Bezug auf einen oder mehrere Garparameter, die von der ersten festen Befehls- und Steuereinheit (110) erfasst und gesendet werden, umfasst.

10. Vorrichtung nach einem der vorstehenden Ansprüche,
**dadurch gekennzeichnet, dass** die zweite mobile Befehls- und Steuereinheit (210) mindestens eine Anzeige (30) zum Anzeigen und Einfügen von Daten umfasst, die zum Anzeigen der von der ersten festen Befehls- und Steuereinheit (110) übertragenen Daten ausgelegt ist, und möglicherweise zum Übertragen von Variationen der Garparameter des Nahrungsmittels (20) an die erste festen Befehls- und Steuereinheit (110).

11. Verfahren zum Regeln und Steuern des Garens von vakuumverpackten Nahrungsmitteln, umfassend: Einführen von zu garendem Nahrungsmittel (20) in einen Behälter (19) aus flexiblem Material, Erzeugen eines Vakuumzustands in dem Behälter (19), um das Nahrungsmittel (20) in einem vakuumdichten Zustand zu verpacken, wobei der Behälter (19) geschlossen wird, wobei Parameter eingestellt werden, die sich auf einen bestimmten Garvorgang in einer Wärmeumwälzeinheit (21) beziehen; Erfassen von Daten bezüglich der Garparameter während des Garvorgangs durch eine erste feste Befehls- und Steuereinheit (110); Übertragen der Daten an eine zweite mobile Befehls- und Steuereinheit (210), die entfernt und im Besitz des Benutzers ist; Überprüfen der von der ersten festen Befehls- und Steuereinheit (110) gesendeten und sich auf die Garparameter beziehenden Daten durch den Benutzer mittels der zweiten mobilen Befehls- und Steuereinheit (210),
**dadurch gekennzeichnet, dass** das Einführen einer stiftförmigen Sonde (33) und eines ersten Sensors (25) durch den Behälter (19) und in das Nahrungsmittel (20) vorgesehen ist, sowie die Übertragung von Innentemperaturdaten des Nahrungsmittels (20), die von der Sonde (33) detektiert wurde, an die zweite mobile Befehls- und Steuereinheit (210), wobei die Sonde (33) einen länglichen Aufbau mit einer starren Struktur aufweist und mit einem spitzen Ende versehen ist, um den vakuumdichten Behälter (19) und das darin enthaltene Nahrungsmittel (20) zu durchstechen und hindurchgeführt zu werden.

12. Verfahren nach Anspruch 11,
**dadurch gekennzeichnet, dass** es einen nachfolgenden Schritt des Variierens der Garparameter durch den Benutzer durch die mobile Befehls- und Steuereinheit (210) umfasst, wenn die von der ersten festen Befehls- und Steuereinheit (110) übertragenen Daten unerwünschte Ereignisse und/oder Anomalien im Garprozess zeigen.

13. Verfahren nach Anspruch 11 oder 12,
**dadurch gekennzeichnet, dass** es einen Speicher- und Verarbeitungsschritt für die Daten umfasst, mit dem es möglich ist, ein historisches Archiv der Garprozesse und -zyklen aufzubauen.

14. Verfahren nach einem der Ansprüche 11 bis 13,
**dadurch gekennzeichnet, dass** es Schritte zum Diagnostizieren der Funktion der Wärmeumwälzeinheit (21) und damit des Garprozesses umfasst, wobei diese Schritte während des Garvorgangs ausgeführt werden und durch die zweite mobile Befehls- und Steuereinheit (210) programmiert und verwaltet werden, die in Bezug auf die Wärmeumwälzeinheit (21) entfernt angeordnet ist.

## Revendications

1. Appareil (10) pour réguler et contrôler la cuisson d'aliments sous vide, muni d'au moins une unité (21) de circulation de chaleur apte à être associée à un réceptacle (11) pour contenir un liquide de cuisson (12) dans lequel au moins un récipient (19) scellé sous vide contenant l'aliment (20) à cuire est au moins partiellement immergé, et un ou plusieurs éléments chauffants (16) pour chauffer le liquide de cuisson (12), ledit appareil comprenant une première unité fixe (110) de commande et de contrôle associée à ladite unité (21) de circulation de chaleur et pourvue d'au moins un premier module (24) de communication de données à distance et d'une deuxième unité mobile (210) de commande et de contrôle, portable et en possession d'un utilisateur, et pourvue d'au moins un deuxième module (29) de communication de données à distance, lesdits premier et deuxième modules (24, 29) de communication de données à distance étant configurés pour permettre une communication à distance et bidirectionnelle entre ladite première unité fixe (110) de commande et de contrôle et ladite deuxième unité mobile (210) de commande et de contrôle, ladite unité fixe (110) de commande et de contrôle étant équipée d'un système de diagnostic intégré configuré pour recevoir, au moins depuis ladite unité (21) de circulation de chaleur, des données relatives aux paramètres de cuisson de l'aliment (20) et aux paramètres de fonctionnement de l'unité (21) de circulation de chaleur, et pour les transmettre à ladite deuxième unité mobile (210) de commande et de contrôle en possession de l'utilisateur, et ledit appareil comprend au moins un récipient (19) fait en un matériau souple et configuré pour contenir ledit aliment (20) dans un état de scellement sous vide, **caractérisé en ce qu'**il comprend un premier capteur (25) configuré pour détecter la température interne dudit aliment (20) et pour transmettre des données de température à ladite deuxième unité mobile (210) de commande et de contrôle, et **en ce que** ledit premier capteur (25) comprend une sonde (33) en forme de broche qui peut être insérée à travers ledit récipient (19) et dans ledit aliment (20) pour détecter ladite température interne, ladite sonde (33) ayant un développement allongé, avec une structure rigide, et étant pourvue d'une extrémité pointue pour percer et traverser le récipient (19) scellé sous vide et la nourriture (20) contenue dans celui-ci.

2. Appareil selon la revendication 1, **caractérisé en ce que** ledit premier capteur (25) est muni d'un élément de communication sans fil (34) configuré pour transmettre les données de température détectées en mode sans fil à ladite deuxième unité mobile (210) de commande et de contrôle.

3. Appareil selon la revendication 2, **caractérisé en ce que** ledit élément de communication sans fil (34) est configuré pour transmettre, en mode sans fil, les données de température détectées audit premier module (24) de ladite première unité fixe (110) de commande et de contrôle, et **en ce que** ledit premier module (24) est configuré pour transmettre lesdites données de température détectées à ladite deuxième unité mobile (210) de commande et de contrôle.

4. Appareil selon l'une quelconque des revendications précédentes, **caractérisé en ce qu'**une bande adhésive (26) est associée audit récipient (19), à travers lequel ladite sonde (33) est insérée, et est configurée pour maintenir les conditions de vide à l'intérieur dudit récipient (19).

5. Appareil selon l'une quelconque des revendications précédentes, **caractérisé en ce que** ladite unité (21) de circulation de chaleur comprend au moins un dispositif (15) pour recirculer le liquide de cuisson (12) associé audit système de diagnostic intégré et apte à être commandé à distance au moyen de ladite deuxième unité mobile (210) de commande et de contrôle.

6. Appareil selon l'une quelconque des revendications précédentes, **caractérisé en ce que** ladite unité (21) de circulation de chaleur comprend un capteur (17) pour détecter la température du liquide de cuisson (12) et un capteur (18) pour détecter le niveau du liquide de cuisson (12), lesdits capteurs étant associés audit système de diagnostic intégré et étant aptes à communiquer à distance avec ladite deuxième unité mobile (210) de commande et de contrôle.

7. Appareil selon l'une quelconque des revendications précédentes, **caractérisé en ce que** lesdits modules (24, 29) de communication de données à distance sont des modules Wi-Fi et lesdites première et deuxième unités fixes et mobiles (110, 210) de commande et de contrôle sont configurées pour communiquer avec un dispositif (27) pour se connecter à Internet (28).

8. Appareil selon l'une quelconque des revendications précédentes, **caractérisé en ce que** lesdites première et / ou deuxième unités fixes et mobiles (110, 210) de commande et de contrôle communiquent avec un service distant (31) de stockage, de traitement et d'échange de données.

9. Appareil selon l'une quelconque des revendications précédentes, **caractérisé en ce qu'**au moins ladite deuxième unité mobile (210) de commande et de contrôle comprend des moyens visuels et / ou acoustiques pour signaler une donnée anormale possible se rapportant à une ou plusieurs paramètres de cuisson détectés et transmis par ladite première unité fixe (110) de commande et de contrôle.

10. Appareil selon l'une quelconque des revendications précédentes, **caractérisé en ce que** ladite deuxième unité mobile (210) de commande et de contrôle comprend au moins un afficheur (30) pour afficher et insérer des données configurées pour afficher les données transmises par ladite première unité fixe (110) de commande et de contrôle et pour éventuellement transmettre à ladite première unité fixe (110) de commande et de contrôle des variations des paramètres de cuisson de l'aliment (20).

11. Procédé pour réguler et contrôler la cuisson d'aliments sous vide, comprenant : le fait d'introduire des aliments (20) à cuire dans un récipient (19) fait en un matériau souple, le fait de générer une condition de vide dans ledit récipient (19) pour mettre ladite nourriture (20) dans une condition de scellement sous vide, le fait de fermer ledit récipient (19), le fait de définir des paramètres relatifs à un processus de cuisson déterminé dans une unité (21) de circulation de chaleur ; le fait de détecter, pendant le processus de cuisson, des données relatives auxdits paramètres de cuisson par une première unité fixe (110) de commande et de contrôle ; le fait de transmettre lesdites données à une deuxième unité mobile (210) de commande et de contrôle, située à distance et en possession de l'utilisateur ; le fait de faire une vérification par l'utilisateur, au moyen de ladite deuxième unité mobile (210) de commande et de contrôle, des données envoyées par ladite première unité fixe (110) de commande et de contrôle et relatives auxdits paramètres de cuisson, **caractérisée en ce qu'**il est prévu l'insertion, à travers ledit récipient (19) et dans ledit aliment (20), d'une sonde en forme de broche (33) et d'un premier capteur (25), et la transmission de données de température interne dudit aliment (20) détectées par ladite sonde (33) à ladite deuxième unité mobile (210) de commande et de contrôle, ladite sonde (33) ayant un développement allongé, avec une structure rigide, et étant prévue avec une extrémité pointue pour percer et traverser le récipient (19) scellé sous vide et la nourriture (20) contenue dans celui-ci.

12. Procédé selon la revendication 11, **caractérisé en ce qu'**il comporte une étape ultérieure de variation des paramètres de cuisson par l'utilisateur au moyen de ladite unité mobile (210) de commande et de contrôle, si les données transmises par ladite première unité fixe (110) de commande et de contrôle détecte des événements indésirables et / ou des anomalies dans le processus de cuisson.

13. Procédé selon la revendication 11 ou la revendication 12, **caractérisé en ce qu'**il comprend une étape de stockage et de traitement de données, au moyen de laquelle il est possible de construire une archive historique des processus et des cycles de cuisson.

14. Procédé selon l'une quelconque des revendications 11 à 13, **caractérisé en ce qu'**il comprend des étapes de diagnostic du fonctionnement de l'unité (21) de circulation de chaleur et donc du processus de cuisson, lesdites étapes étant accomplies pendant le processus de cuisson et programmées et gérées par la deuxième unité mobile (210) de commande et de contrôle située à distance par rapport à ladite unité (21) de circulation de chaleur.
